# EUROPEAN PATENT SPECIFICATION

(11) **EP 1 570 274 B1**
(45) Date of publication and mention of the grant of the patent: **04.05.2011**
(21) Application number: 02785474.4
(22) Date of filing: 13.12.2002
(51) Int. Cl.: G01N 35/00

(54) **ANALYZER AND ANALYSING METHOD AND A FLUID CARTRIDGE**
ANALYSATOR, ANALYSEVERFAHREN UND FLÜSSIGKEITSKARTUSCHE
APPAREIL, PROCÉDÉ D'ANALYSE, ET CARTOUCHE DE LIQUIDE

(43) Date of publication of application: 07.09.2005
(73) Proprietor: DHR Finland Oy, 20750 Turku (FI)
(72) Inventor: TOLONEN, Pertti, FI-20740 Turku (FI)
(74) Representative: Westerholm, Carl Christian
(86) International application number: PCT/FI2002/001019
(87) International publication number: WO 2004/055522

(56) References cited:
- EP-A- 0 517 093
- EP-A- 0 987 534
- EP-A- 1 277 438
- US-A- 4 834 944
- US-A- 5 320 809

## Description

The invention relates to an analyzer and an analysing method as well as to a fluid cartridge as presented in the preambles of the independent claims disclosed hereinbelow.

Different kinds of analyses, especially diagnostic analytic measurements are conducted for instance in laboratories, clinics and hospitals. It is typical of such analyses that blood samples of patients are handled therein. There exists a great variation in the measurement equipment and methods that can be used. For example in laboratories, large amounts of samples are often handled. Especially in collective examinations, analytic measurements are typically conducted in such a manner that samples are collected in effective measuring equipment in which a large amount of samples are measured at a time in a batch measurement. In hospitals and clinics, it is, however, often necessary to conduct individual measurements in order to be able to quickly analyze a particular sample. Moreover, especially in clinics and at doctor's receptions it is often necessary to conduct occasional analyses.

Because the need to analyze individual samples is well known as such, attempts have been made to develop analyzers that enable analysis of individual samples. It is, however, a problem in known analyzers that they are complex both functionally and structurally. As a result of this, the acquisition and maintenance costs of the apparatus are often rather high, wherein it is not economically sensible to acquire the apparatus only for occasional analyses.

In addition, in known apparatuses a drawback resulting from the storage and transfer of the fluids and reagents necessary in the analyses as well as from the transfer of the sample in the apparatus is the fact that it is difficult to keep the apparatuses clean. Some prior art apparatuses are disclosed in US-48 34 944 and EP 0 517 093.

Hence, it is an aim of the present invention to provide an improved analyzer and an analysing method and a fluid cartridge.

The aim is thus to provide an analyzer and analysing method with a simple and durable structure and operation, by means of which it is possible to conduct individual analyses reliably and rapidly.

Another purpose is especially to provide a fluid cartridge used for example in the analyzer and analysing method according to the present invention, which fluid cartridge has a simple and inexpensive structure.

Yet another purpose is to provide especially such a fluid cartridge that comprises the buffer solution necessary for performing the analyses.

To attain the aforementioned purposes, the analyzer, analysing method and fluid cartridge according to the invention are characterized in what will be presented in the characterizing parts of the independent claims disclosed hereinbelow.

Typically, in the method according to the present invention, the analyzer is equipped with a sample container, a fluid cartridge and at least one analysis cartridge. At least part of the sample for analysis is transferred from the sample container to the sample chamber of the fluid cartridge. Thereafter at least part of the sample is transferred from the sample chamber of the fluid cartridge to the analysis cartridge that comprises at least some of the reagents used in the analysis, and measurement actions are performed for the sample in the analysis cartridge. In this context the term sample container refers to an instrument in which it is possible to transfer and store a sample, such as a sample tube, which can be for example a closed vacuum tube. In this context the term fluid cartridge refers to an instrument by means of and/or through which the fluids necessary for performing the analysis are brought to the analyzer. In this context, the term analysis cartridge refers to an instrument that comprises a reaction chamber into which it is possible to transfer the sample to be measured, said chamber containing the reagent necessary for performing the analysis.

In an advantageous method of the present invention, the analyzer checks the type and usability of the analysis cartridge and/or the fluid cartridge before the sample is transferred from the fluid cartridge to the analysis cartridge. Thus, the use of such analysis cartridges and/or fluid cartridges that could contain outdated fluids is prevented and the applicability of the same for the analysis to be conducted is ensured.

According to an advantageous method of the present invention, the sample container is opened by means of a tool contained in the fluid cartridge for opening the closed sample container, advantageously by piercing the lid of the sample container. When the sample container is arranged in the analyzer in a closed state, the person handling the sample is not exposed in contact with the sample.

In accordance with an advantageous method of the present invention, the sample to be analysed is transferred from the sample container to the sample chamber of the fluid cartridge by vacuum pumping through the sample chamber. The pumping is advantageously conducted for example by means of a peristaltic pump. When the sample is transferred by means of vacuum pumping through the sample chamber, the pump which is used in the transfer of the sample and which is typically integrated in the analyzer, is not brought in contact with the sample, wherein separate cleaning actions are not required by the means for transferring the sample. Furthermore, the use of a vacuum pump is an inexpensive solution.

In an advantageous method of the present invention, buffer solution is transferred from a buffer solution chamber of the fluid cartridge to a reaction chamber in the analysis cartridge before the sample is transferred from the fluid cartridge to the analysis cartridge. In other words, it is not necessary to provide the analyzer with a separate buffer solution container, as the buffer solution that is possibly required is brought to the analyzer in the buffer solution chamber of the fluid cartridge, from which it can be transferred to the analysis cartridge.

In a preferred method of the present invention, the transfer of fluids between the fluid cartridge and the analysis cartridge is performed by means of pipetting. In a very advantageous manner of pipetting, loose pipette jets, advantageously disposable loose pipette jets that are arranged in the analyzer are used in connection with the pipetting in the fluid cartridge. As a result of the use of loose pipette jets, the fluids used in the analyzer do not enter in contact with the pipette itself and thereby with the analyzer itself, wherein separate cleaning equipment is not required to clean the transfer equipment of fluids. Furthermore, it is an easy and inexpensive way to equip the analyzer with the loose jets to arrange said loose jets in the analyzer in connection with the fluid cartridge.

One advantageous method according to the present invention comprises a step in which the sample for analysis is diluted before measurement. Thus, the dilution stage comprises at least the following steps: the buffer solution is transferred from the buffer solution chamber of the fluid cartridge to a dilution chamber of the analysis cartridge, at least part of the sample is transferred from the sample chamber of the fluid cartridge to a dilution chamber of the analysis cartridge, the buffer solution and the sample transferred to the dilution chamber are mixed together, preferably by shaking, and the mixture of the buffer solution and the sample is transferred from the dilution chamber of the analysis cartridge to the reaction chamber of the analysis cartridge. When the dilution of the sample is conducted in the buffer solution chamber of the fluid cartridge by using the buffer solution arranged in the analyzer, separate equipment for storing and transferring the diluting fluid in connection with the sample is not necessary in the analyzer. Thus, the structure of the analyzer becomes less complex and the maintenance costs are low.

In a preferred method of the present invention, the measurement steps include at least one of the following stages: *i*) preparation steps of the measurement, *ii*) measurement, and *iii*) finishing steps of the measurement.

The method according to the invention may also include preparation steps for the measurement, wherein according to a preferred method, the preparation steps for the measurement include at least the following stages: *a*) buffer solution is transferred and sprayed from the buffer solution chamber of the fluid cartridge to the reaction chamber of the analysis cartridge, *b*) the mixture produced in the reaction chamber is sucked and transferred from the reaction chamber to a refuse chamber in the fluid cartridge, and *c*) steps *a* and *b* are repeated, if necessary, typically approximately 2 to 10 times, and advantageously approximately 4 to 8 times. The preparation steps can also include a stage where the reaction chamber is dried by blowing gas, advantageously clean air, therein. When the fluids that are used in the preparation steps and that remain as waste after said steps are transferred to the fluid cartridge and to the refuse chamber advantageously located in the fluid cartridge, separate means for handling the refuse fluids are not absolutely necessary.

The refuse fluids generated in the finishing steps of the measurement possibly included in the method, in other words the fluids produced when at least some of the chambers of the analysis cartridge are emptied, can also be advantageously transferred to said refuse chamber. It is also advantageous that the sample in the sample chamber of the fluid cartridge as well as the buffer solution in the buffer solution chamber are transferred to the refuse chamber of the fluid cartridge.

In an advantageous method of the present invention, the refuse chamber of the fluid cartridge is emptied by transferring the contents of the same to a refuse container in the analyzer. It is also possible, that the refuse fluids are transferred away from the analyzer with the fluid cartridge, wherein it is not necessary to provide the analyzer with separate means for refuse fluids and the treatment of the same.

In the method according to the invention, the measurement is conducted on the basis of Epi-illumination principle. In this context the Epi-illununation principle refers to a measurement in which the illumination and measurement of the sample is conducted on the same side of the sample. Advantageously, the measurement is also conducted confocally, wherein the excitation and emission optics have a shared focal point and at least partly shared optical route. By means of the Epi-illumination principle, it is possible to implement the reaction chamber of the analysis cartridge without having to arrange an optical route through the chamber for the beam used in the measurement.

A typical analyzer according to the present invention comprises at least:
- means for receiving a sample container containing the sample to be measured,
- means for handling one or several analysis cartridges,
- means for transferring the sample from the sample container to the sample chamber of the fluid cartridge,
- means for transferring the sample between the fluid cartridge and the analysis cartridge,
- means for performing the measurement on the sample transferred to the analysis cartridge.

In a preferred analyzer according to the present invention, the means for handling one or several analysis cartridges comprise at least one cartridge drum. In this context the term cartridge drum refers to an instrument by means of which the analysis cartridge can be transferred in relation to the fluid cartridge. In a very advantageous manner the cartridge drum is arranged to operate as a so-called incubator drum, wherein the analysis cartridge can be shaken, and the sample contained therein can be kept in a desired temperature.

One preferred fluid cartridge to be used in the analyzer according to the present invention, and a typical fluid cartridge according to the present invention comprise at least a tool for opening the closed sample container, a sample chamber that is arranged to receive at least part of the sample contained in the sample container, a buffer solution chamber that contains buffer solution necessary in the handling of the sample or in which the buffer solution necessary in the handling of the sample is arranged to be placed, a refuse chamber that is arranged to receive at least part of the fluids transferred to the analysis cartridge and/or the excess sample contained in the sample chamber and the excess buffer solution contained in the buffer solution chamber. By means of the fluid cartridge it is possible to combine a large number of functions in the same part, wherein the structure of the analyzer itself can be simplified significantly, and manufacturing and maintenance costs of the same are significantly reduced.

In an embodiment of the invention, it is possible to utilize the fluid cartridge to take the fluids necessary in the analysis to the analyzer, to remove the refuse from the analyzer, to convey the sample to the analyzer and to bring the disposable loose pipette jets to the analyzer. Furthermore, the fluid cartridge can be advantageously manufactured of plastic by means of injection moulding, wherein the manufacture and use of the fluid cartridge is also inexpensive.

The tool contained in the fluid cartridge for opening the closed sample container very advantageously also comprises at least a piercing tool for piercing the lid of the sample container. By said tool it is possible to open the sample container without using other opening tool by moving the fluid cartridge, the piercing tool and/or the sample container in such a manner that said member pierces the lid of the sample container.

In an advantageous fluid chamber according to the present invention, the refuse chamber is provided with solidifying agent to solidify the fluids arranged therein. Thus, liquid refuse is not produced and the use of the used fluid cartridge becomes easier, and it is not necessary to empty the refuse chamber. The solidifying agent can be for example a gel-like or powdery agent, in which the fluid absorbs and/or binds itself.

The main advantage of the method and analyzer according to the present invention is their simple operation, and the low manufacturing and maintenance costs resulting therefrom. Because of its affordability, the device is cost-effective also when measurements are mainly conducted occasionally.

The most important advantages of the fluid cartridge according to the present invention include its versatile functions, wherein the analyzer itself can be rather simple in structure. It is also advantageous because of its low costs.

Furthermore, the method, analyzer and fluid cartridge according to the invention are advantageous in that respect that when they are in use, there is no risk of confusion between different samples.

The method, analyzer and fluid cartridge according to the invention are advantageous also in that respect that the analyzer becomes dry, so to say, wherein all the parts that are in contact with the sample and the possible buffer solution are changed between the samples.

Yet another advantage of the method and analyzer according to a very advantageous embodiment of the invention is that the analyzer does not contain fluids between different testing times.

In the following, the invention will be described in more detail with reference to the appended drawing, in which
- Fig. 1: is an exemplary, schematic view of an analyzer according to the inven- tion,
- Fig. 2: is an exemplary, schematic view of an analyzer according to the inven- tion,
- Fig. 3: is an exemplary, schematic view of a fluid cartridge according to the invention, seen obliquely from above,
- Fig. 4: is an exemplary, schematic top view of fluid cartridge according to the invention,
- Fig. 5: is an exemplary, schematic cross section A-A of the fluid cartridge shown in Fig. 3,
- Fig. 6: is an exemplary, schematic view of a fluid cartridge according to the invention, when attached to a transfer means, and
- Fig. 7: is an exemplary, schematic view of a fluid cartridge according to the invention, when attached to a transfer means.

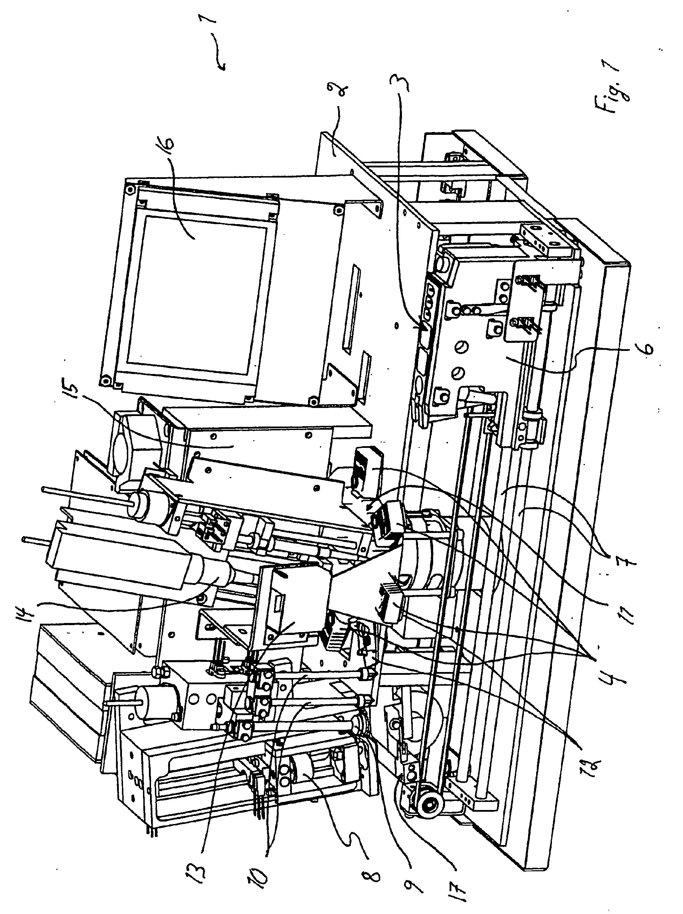

Figure 1 is an exemplary schematic view of an embodiment of an analyzer according to the invention. Reference numeral 1 represents the analyzer. The analyzer comprises a frame 2 and connected thereto are means for handling the fluid cartridge 3, means for handling the analysis cartridges 4, a holder 8 for attaching the sample container containing the sample to be measured to the analyzer, means for conducting the measurement and actuators for controlling the function of the analyzer 1.

The means for handling the fluid cartridge 3 comprise transfer means for the fluid cartridge, means for transferring the sample from the sample container attached to the fluid cartridge 3 to the fluid cartridge, and means for treating the protective films of the fluid cartridge 3. The transfer means for the fluid cartridge comprise a holder 6 for the fluid cartridge, in which the fluid cartridge 3 can be placed. The holder 6 of the fluid cartridge is connected to a linear guide 7 and to a transfer motor (not shown in the figure), wherein the holder 6 of the fluid cartridge and thereby the fluid cartridge 3 can be transferred in the analyzer. The means for transferring the sample from the sample container 5 to the fluid cartridge comprise opening means for the sample container 5, which are provided by an opening tool that can be lifted out of the fluid container in such a manner that it is possible to utilize the means to pierce the lid of the sample container. To produce the lifting movement of the opening tool, the analyzer is provided with a lifter 17, by means of which the lifting movement can be performed. Furthermore, the means for transferring the sample from the sample container to the fluid cartridge comprise a peristaltic vacuum pump 9 connected to the frame of the analyzer, by means of which it is possible to suck the sample from the sample container to the fluid cartridge. The vacuum pump 9 is also provided with means for treating the protective films of the fluid cartridge 3, i.e. two piercers 10 that move simultaneously with the vacuum pump 9 and pierce the films of the fluid cartridge 3 when the vacuum pump is lowered on the surface of the fluid cartridge.

The means for handling the analysis cartridges 4 comprise a cartridge drum 11 attached to the frame of the analyzer, which cartridge drum is provided with fasteners 12 for the analysis cartridges. To the frame of the analyzer is also attached an optical reader 13 by means of which it is possible to read the identifier attached to the analysis cartridge and to identify the type of the analysis cartridge. By turning the cartridge drum 11, it is possible to transfer the analysis cartridges to different positions, i.e. to the optical reader and to the means for performing the measurement.

The means for performing the measurement comprise pipetting means 14 for transferring the fluids between the fluid cartridge and the analysis cartridges, as well as between the different chambers of the analysis cartridge. Furthermore, the frame of the analyzer is provided with a measurement means 15 for performing the measurement on the basis of the Epi-illumination principle in the analysis cartridge turned at the location of the measurement means 15.

The actuators for controlling the operation of the analyzer 1 comprise a touch screen 16 via which it is possible to monitor and control the function of the device, as well as a control unit connected to the touch screen, said control unit being connected to the sensors and actuators of the analyzer in a manner known as such. The control unit is arranged to receive measurement information from the sensors, and to control the operation of the actuators of the analyzer, for example to control the transfer of fluids from the fluid cartridge to the analysis cartridges and to store the identification information of the analysis cartridges as well as information on the conducted measurements. Moreover, the analyzer can comprise means for connecting the analyzer in a manner known as such to one or several systems outside the analyzer, such as to a patient information system.

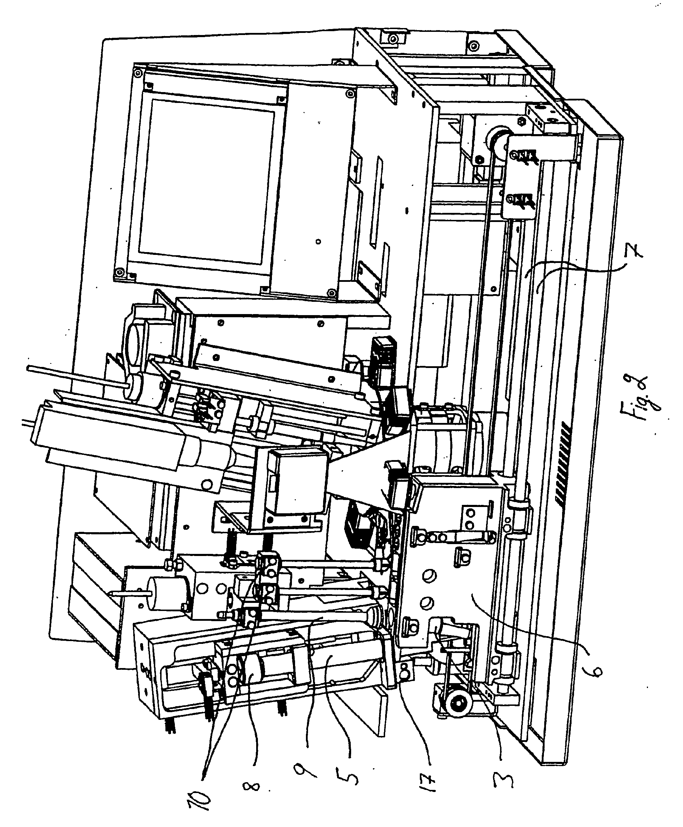

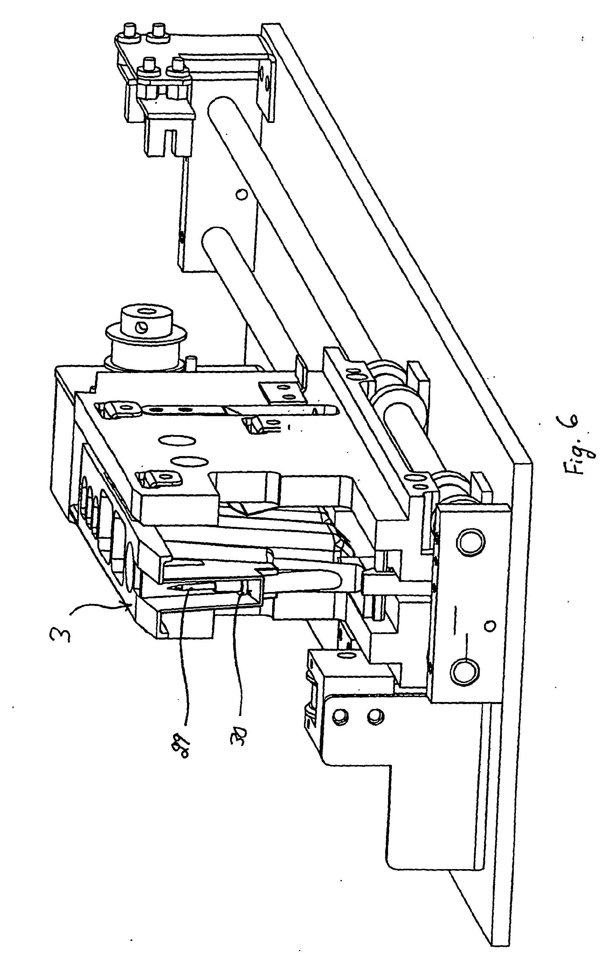

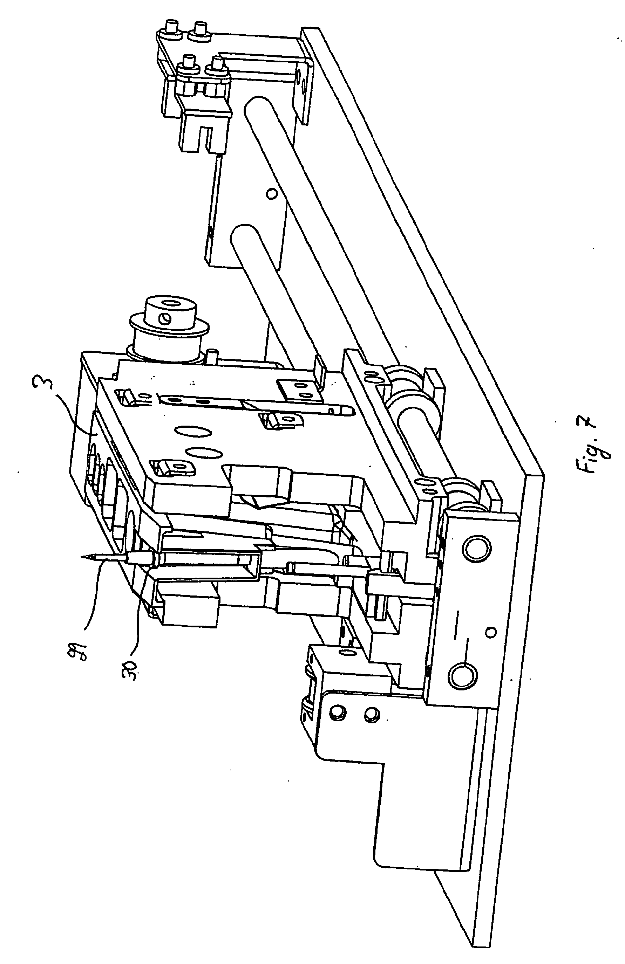

Fig. 2 shows the analyzer according to Fig. 1, in which the sample container 5 is placed in the holder 8. Furthermore, Fig. 2 illustrates how the fluid cartridge 3 is transferred along a linear guide 7 in such a manner that the fluid cartridge 3 is located below the sample container 5 and the vacuum pump 9 and the piercers 10. In this position the protective films of the fluid cartridge can be pierced by lowering the piercers 10 down, and the vacuum pump 9 can be placed tightly against the fluid cartridge 3. Furthermore, by lifting the tool, i.e. a needle arranged inside the fluid cartridge to open the sample container, it is possible to pierce the lid of the sample container, wherein the sample can be transferred from the sample container to the fluid cartridge. The position of the needle inside and outside the fluid cartridge is illustrated in more detail in Figs 6 and 7.

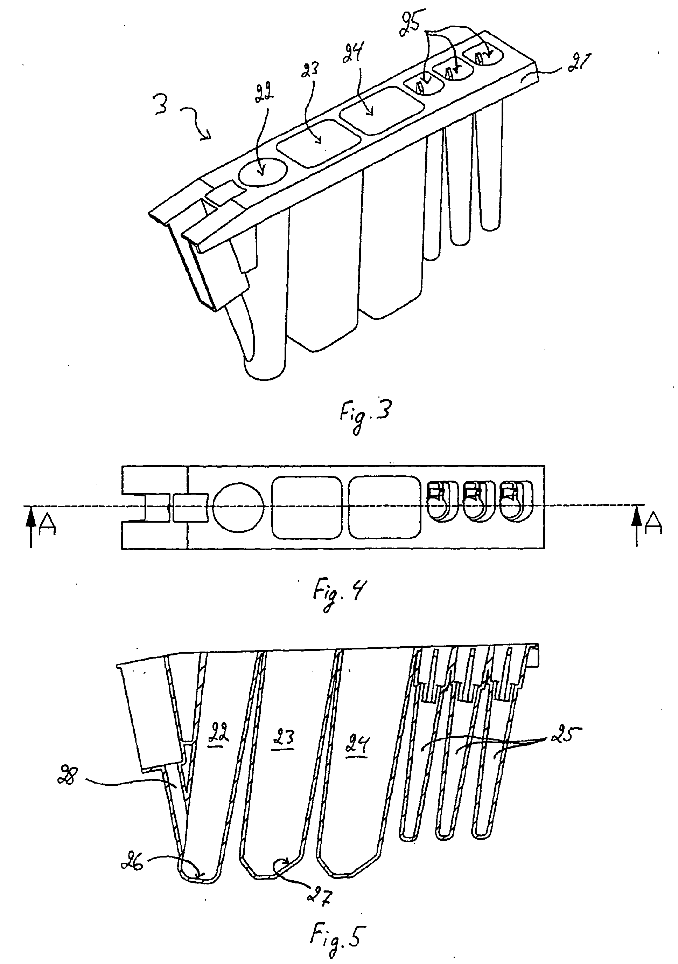

Figs 3 to 5 are exemplary schematic views of an embodiment of the fluid cartridge according to the present invention. The fluid cartridge 3 comprises a frame 21 that is provided with a sample chamber 22, a buffer solution chamber 23, a refuse chamber 24, and chambers 25 for the loose pipette jets that are attached to the chambers 25 for example by means of friction effective between the loose jets and the chamber. The chambers 25 for the loose pipette jets are inclined in such a manner that the loose jets can be easily picked up therefrom automatically by means of the pipette. The angle of inclination of the chambers and the loose pipettes corresponds to the angle of inclination of the pipetting means. The bottom 26 of the sample chamber 22 and the bottom 27 of the buffer solution chamber 23 are inclined and designed in such a manner that the chambers can be aspirated and dispensed by means of the pipette as well as possible. The fluid cartridge 22 also comprises a sample container chamber 28 which can be provided with a hollow needle (not shown in the figure), by means of which it is possible to pierce the lid of the sample chamber to be placed against the sample container chamber by lifting the needle into the position shown in Fig. 7. The sample container chamber 28 provides an access to the sample chamber 22, wherein the sample taken from the sample tube through the needle can be transferred from the sample container to the sample chamber.

The buffer solution chamber 23 is provided with buffer solution that can be used for diluting the sample and to clean the chambers of the analysis cartridge and the sample cartridge. The refuse chamber 24 is provided with a solidifying agent that solidifies the fluids transferred to the refuse chamber. The buffer solution chamber 23 and the refuse chamber 24 are covered with a lid. On top of the lid there is a bar code indicating for example the type of the fluid cartridge and the use-by date.

The fluid cartridge can also be provided with a separate identifier part that breaks in the use of the fluid cartridge, wherein the by checking the state of the identifier it is possible to ensure that the fluid cartridge has not been used.

One advantageous fluid cartridge according to the invention can be produced for example by making the frame 21 of the fluid cartridge of plastic by means of injection moulding. Thereafter the needle is manufactured by injection moulding, and the needle is installed in the sample container chamber contained in the fluid cartridge. Thereafter the loose pipette jets are installed in chambers 25 of their own, and the solidifying agent is dosed in the refuse chamber and the buffer solution in the buffer solution chamber. Thereafter the refuse chamber and the buffer solution chamber are closed with a lid secured by heat sealing. The lid can be provided with a bar code and other necessary identifiers for example by means of ink jetting. Thereafter the finished fluid cartridges can be packed for example into roll bags that can be further packed into customer packages of desired size.

By way of example, Figs 6 and 7 show the fluid cartridge 3 in the position shown in Fig. 2. For the sake of clarity, only the linear guides 7 and the clamps of the same are shown of the analyzer. According to Fig. 6, the sample container chamber of the fluid cartridge is provided with a needle 29 whose point part is located inside the fluid cartridge in such a manner that it is not possible to accidentally touch the needlepoint. The needle 29 comprises a lug 30 in which the lifter (shown in Fig. 1 with the reference numeral 17) can be positioned. By lifting the lifter to the position shown in Fig. 2, the needle 29 can be lifted to the position shown in Fig. 7. Thus, the needle is lifted so high that it is possible to use the needle to pierce the lid of the sample container, and the sample can be injected inside the fluid cartridge. After the injection it is possible to lower the needle back to the position shown in Fig. 6, and in a shelter by moving the lifter to the lower position shown in Fig. 1.

By means of an advantageous analyzer according to the present invention, a sample is analyzed in the following manner. The user of the analyzer places the fluid cartridge 3 to the holder 6 of the sample cartridge of the analyzer 1 and a desired number of desired analysis cartridges 4 in the fasteners 12 for the analysis cartridges in the cartridge drum 11. The sample container 5 containing the sample for analysis is attached to the holder 8. Thereafter it is possible to start the analysis. The analyzer checks the type and usability of the analysis cartridges as well as the usability of the fluid cartridge on the basis of the identifiers located in the cartridges. The user of the analyzer can check the type and acceptability of the analysis cartridges on the display of the analyzer and accept the same.

At the next stage the fluid cartridge 3 is transferred along the guide 7 in such a manner that the fluid cartridge 3 is at the location of the holder 8 and the sample container 5 located therein, i.e. in the position shown in Fig. 2. The sample container is held in its place by means of the holder 8, wherein the needle 29 in the fluid cartridge can be lifted by the lifter 17 in such a manner that the needle 29 pierces the lid of the sample container. The vacuum pump 9 and the piercers 10 are lowered down, wherein the vacuum pump is positioned tightly against the edges of the sample chamber, and the piercers pierce the protective films of the buffer solution and refuse chambers. The sample is sucked from the sample container through the sample chamber of the fluid cartridge with a vacuum pump placed tightly on top of the chamber. The analyzer advantageously comprises a member by means of which the amount of sample in the sample chamber can be monitored, whereby it is possible to control the transfer of the sample from the sample container. After the sample is injected, the needle 29 is lowered back inside the fluid cartridge into a position in which it cannot be accidentally touched.

At the next stage the fluid cartridge is transferred in such a manner that the pipette of the analyzer can retrieve the loose pipette jet brought to the analyzer in the fluid cartridge and transfer the buffer solution to the reaction chamber of the analysis cartridge by means of said first loose jet. If such a fluid cartridge is used in the analyzer that does not already contain buffer solution in the buffer solution chamber of the fluid cartridge, the analyzer advantageously comprises a buffer solution container, from which buffer solution is transferred to the buffer solution chamber.

If the analysis does not require dilution of the sample, the same first loose pipette jet is utilized to transfer the sample from the sample chamber of the fluid cartridge to the reaction chamber of the analysis cartridge. If the analysis requires dilution of the sample, the dilution is conducted in such a manner that the first loose jet is utilized to transfer buffer solution from the buffer solution chamber of the fluid cartridge to the dilution chamber of the analysis cartridge (typically approximately 5 to 500 µl), and further, the same loose jet is utilized to transfer the sample from the sample chamber to the dilution chamber (typically approximately 5 to 20 µl), whereafter the analysis cartridge is stirred up (typically for 1 to 5 seconds) by means of the cartridge drum. After the stirring, the diluted sample is transferred from the dilution chamber to the reaction chamber. The dilution can also be conducted for example by taking a desired ratio of buffer solution and sample in the loose pipette jet, and by dispensing both fluids simultaneously for example either to the reaction chamber or to the dilution chamber.

When the sample to be measured has been transferred to the reaction chamber of the analysis cartridge, the sample is stirred up, and the temperature of the sample is monitored and controlled by means of the cartridge drum. After a stirring of desired duration a washing step is performed in which the buffer solution is transferred from the buffer solution chamber to the reaction chamber, the liquid mixture produced in the reaction chamber is transferred to the refuse chamber of the fluid cartridge, and the spraying of the buffer solution and the emptying of the reaction chamber is repeated for a desired number of times, typically approximately 4 to 8 times, most advantageously 6 times. After the washing of the reaction chamber the reaction chamber is dried by blowing heated air into the chamber.

When the reaction chamber of the analysis chamber has been washed and dried, the analysis cartridge is transferred underneath the measuring means by turning the cartridge drum, said measuring means conducting the measurement on the basis of the Epi-measurement principle.

When the measurement has been conducted, the fluid possibly contained in the dilution chamber, as well as the sample remaining in the sample chamber and the residual buffer solution are transferred to the refuse chamber of the fluid cartridge. The solidifying agent contained in the refuse chamber solidifies the fluids transferred therein. If the fluid cartridge in use is of such a type that it does not contain solidifying agent located in the refuse chamber, the analyzer can be of such a type that it contains means for emptying the refuse chamber.

After the analysis the user of the analyzer removes the used fluid cartridge, the analysis cartridges and the sample container from the analyzer and disposes of them in an appropriate manner.

The intention is not to restrict the invention to the embodiments described above by way of example, but quite the contrary, it is intended that the invention can be interpreted widely within the scope of protection defined by the claims presented hereinbelow.

## Claims

1. A method for analysing a sample, in which method the sample is brought to an analyzer, it is subjected to measures relating to determining the concentration of the analyte to be examined, and the sample is measured, wherein
- the analyzer (1) is equipped with a sample container (5), a fluid cartridge (3) and at least one analysis cartridge (4),
- at least part of the sample for analysis is transferred from the sample container (5) to the sample chamber (22) of the fluid cartridge (3),
- at least part of the sample is transferred from the sample chamber (22) of the fluid cartridge (3) to the analysis cartridge (4), that comprises at least some of the reagents used in the analysis, and
- measurement steps are performed for the sample contained in the analysis cartridge (4).

2. The method according to claim 1, wherein analyzer (1) checks the type and usability of the analysis cartridge (4) and/or the fluid cartridge (3) before the sample is transferred from the fluid cartridge (3) to the analysis cartridge (4).

3. The method according to claim 1, wherein the sample container (5) is opened by using a tool (29) contained in the fluid cartridge (3) for opening the closed sample container, advantageously by piercing the lid of the sample container.

4. The method according to claim 1, wherein the transfer of the sample for analysis from the sample container (5) to the sample chamber (22) of the fluid cartridge (3) is conducted by vacuum pumping through the sample chamber (22), advantageously for example by means of a peristaltic pump (9).

5. The method according to claim 1, wherein buffer solution is transferred from a buffer solution chamber (23) of the fluid cartridge (3) to a reaction chamber of the analysis cartridge (4) before the sample is transferred from the fluid cartridge (3) to the analysis cartridge (4).

6. The method according to claim 1, wherein the transfer of fluids between the fluid cartridge (3) and the analysis cartridge (4) in conducted by means of pipetting.

7. The method according to claim 6, wherein loose pipette jets, advantageously disposable loose pipette jets, arranged in the analyzer (1) in connection with the fluid cartridge (3), are used in the pipetting.

8. The method according to claim 1, wherein the sample for analysis is diluted before measurement, and that the dilution consists of at least the following stages:
- buffer solution is transferred from the buffer solution chamber (23) of the fluid cartridge (3) to the dilution chamber of the analysis cartridge,
- at least part of the sample is transferred from the sample chamber (22) of the fluid cartridge (3) to the dilution chamber of the analysis cartridge (4),
- the buffer solution and sample transferred to the dilution chamber is stirred up, advantageously by shaking, and
- the mixture of buffer solution and sample is transferred from the dilution chamber of the analysis cartridge to the reaction chamber of the analysis cartridge.

9. The method according to claim 1, wherein the measurement steps include at least one of the following stages:
i) preparation steps of the measurement,
ii) measurement, and
iii) finishing steps of the measurement.

10. The method according to claim 9, wherein the preparation steps of the measurement include at least the following stages:
a) buffer solution is transferred and sprayed from the buffer solution chamber (23) of the fluid cartridge (3) to the reaction chamber of the analysis cartridge (4),
b) the mixture produced in the reaction chamber is sucked and transferred from the reaction chamber to a refuse chamber (24) in the fluid cartridge (3), and
c) if necessary, the stages a and b are repeated, typically approximately 2 to 10 times, and advantageously approximately 4 to 8 times.

11. The method according to claim 10, wherein the preparation steps for the measurement also include a stage in which the reaction chamber is dried by conducting heated gas, advantageously air thereto.

12. The method according to claim 9, wherein the measurement is conducted on the basis of the Epi-illumination principle.

13. The method according to claim 9, wherein as a finishing step of the measurement, at least some of the chambers of the analysis cartridge (4) are emptied by transferring the fluids contained therein to the refuse chamber (24) of the fluid cartridge (3).

14. The method according to claim 13, wherein the sample in the sample chamber (22) of the fluid cartridge (3) and the buffer solution in the buffer solution chamber (23) are transferred to the refuse chamber (24) of the fluid cartridge (3).

15. The method according to claim 13 or 14, wherein the refuse chamber (24) is emptied by transferring the contents of the same to a refuse container in the analyzer (1).

16. An analyzer, wherein the analyzer (1) comprises at least:
- means for receiving a sample container (5) containing the sample to be measured,
- means for handling at least one fluid cartridge (3),
- means for handling one or several analysis cartridges (4),
- means for transferring the sample from the sample container (5) to a sample chamber (22) of the fluid cartridge (3),
- means for transferring the sample between the fluid cartridge (3) and the analysis cartridge (4), and
- means for performing the measurement on the sample transferred to the analysis cartridge (4).

17. The analyzer according to claim 16, wherein the fluid cartridge (3) comprises at least:
- a tool for opening the closed sample container (5),
- a sample chamber (22) that is arranged to receive at least part of the sample contained in the sample container (5),
- a buffer solution chamber (23) which contains the buffer solution necessary in the handling of the sample, or in which the buffer solution necessary in the handling of the sample is arranged to be placed,
- a refuse chamber (24) that is arranged to receive at least some of the fluids transferred to the analysis cartridge (4) and/or the excess sample contained in the sample chamber (22) and the excess buffer solution contained in the buffer solution chamber (23).

18. The analyzer according to claim 17, wherein the tool for opening the closed sample container comprises at least a piercing tool (29) for piercing the lid of the sample container.

19. The analyzer according to claim 16 or 17, wherein the means for handling one or several analysis cartridges (4) comprise at least one cartridge drum (11).

20. The analyzer according to claim 17, wherein the fluid cartridge also comprises at least one loose jet, that is arranged removable and arranged to be used at least in the means for transferring the sample between the fluid cartridge (3) and the analysis cartridge.

21. A fluid cartridge, wherein the fluid cartridge (3) comprises at least:
- a tool for opening the closed sample container (5),
- a sample chamber (22) that is arranged to receive at least part of the sample contained in the sample container (5),
- a buffer solution chamber (23) which contains buffer solution necessary in the handling of the sample, or in which the buffer solution necessary in the handling of the sample is arranged to be placed,
- a refuse chamber (24) that is arranged to receive at least some of the fluids transferred to the analysis cartridge (4) and/or the excess sample contained in the sample chamber (22) and the excess buffer solution contained in the buffer solution chamber (23).

22. The fluid cartridge according to claim 21, wherein the tool for opening the closed sample container (5) comprises at least a piercing tool (29) for piercing the lid of the sample container.

23. The fluid cartridge according to claim 21, wherein the fluid cartridge also comprises at least one loose jet, such as loose pipette jet that is arranged removable.

24. The fluid cartridge according to claim 21, wherein the refuse chamber (24) is provided with solidifying agent to solidify the fluids to be arranged therein.

## Patentansprüche

1. Ein Verfahren zum Analysieren einer Probe, in welchem Verfahren die Probe zu einem Analysator gebracht wird, die Probe Maßnahmen betreffend das Bestimmen der Konzentration des zu untersuchenden Analyten unterzogen wird, und die Probe gemessen wird, wobei
- der Analysator (1) mit einem Probenbehälter (5), einer Flüssigkeitenkassette (3) und mindestens einer Analysekassette (4) ausgestattet ist,
- mindestens ein Teil der Probe für die Analyse von dem Probenbehälter (5) in die Probenkammer (22) der Flüssigkeitenkassette (3) transferiert wird,
- mindestens ein Teil der Probe von der Probenkammer (22) der Flüssigkeitenkassette (3) in die Analysekassette (4) transferiert wird, welche mindestens einige der Reagenzien, die in der Analyse verwendet werden, umfasst, und
- Messschritte für die in der Analysekassette (4) enthaltene Probe durchgeführt werden.

2. Das Verfahren nach Anspruch 1, wobei der Analysator (1) den Typ und die Verwendbarkeit der Analysekassette (4) und/oder der Flüssigkeitenkassette (3) überprüft, bevor die Probe von der Flüssigkeitenkassette (3) in die Analysekassette (4) transferiert wird.

3. Das Verfahren nach Anspruch 1, wobei der Probenbehälter (5) mit Hilfe eines Werkzeugs (29) geöffnet wird, welches zum Öffnen des geschlossenen Probenbehälters in der Flüssigkeitenkassette (3) enthalten ist, vorteilhafterweise durch Durchstechen des Deckels des Probenbehälters.

4. Das Verfahren nach Anspruch 1, wobei der Transfer der Probe für die Analyse von dem Probenbehälter (5) in die Probenkammer (22) der Flüssigkeitenkassette (3) durch Vakuumpumpen durch die Probenkammer (22) durchgeführt wird, vorteilhafterweise zum Beispiel mittels einer peristaltischen Pumpe (9).

5. Das Verfahren nach Anspruch 1, wobei Pufferlösung von einer Pufferlösungskammer (23) der Flüssigkeitenkassette (3) in eine Reaktionskammer der Analysekassette (4) transferiert wird, bevor die Probe von der Flüssigkeitenkassette (3) in die Analysekassette (4) transferiert wird.

6. Das Verfahren nach Anspruch 1, wobei der Transfer der Flüssigkeiten zwischen der Flüssigkeitenkassette (3) und der Analysekassette (4) mittels Pipettieren durchgeführt wird.

7. Das Verfahren nach Anspruch 6, wobei lose Pipettenjets, vorteilhafterweise lose Einweg-Pipettenjets, welche in dem Analysator (1) in Verbindung mit der Flüssigkeitenkassette (3) angebracht sind, für das Pipettieren verwendet werden.

8. Das Verfahren nach Anspruch 1, wobei die Probe für die Analyse vor der Messung verdünnt wird, und wobei die Verdünnung aus mindestens den folgenden Schritten besteht:
- Pufferlösung wird von der Pufferlösungskammer (23) der Flüssigkeitenkassette (3) in die Verdünnungskammer der Analysekassette transferiert,
- mindestens ein Teil der Probe wird von der Probenkammer (22) der Flüssigkeitenkassette (3) in die Verdünnungskammer der Analysekassette (4) transferiert,
- die Pufferlösung und die Probe, welche in die Verdünnungskammer transferiert wurden, werden aufgewühlt, vorteilhafterweise durch Schütteln, und
- das Gemisch von Pufferlösung und Probe wird von der Verdünnungskammer der Analysekassette in die Reaktionskammer der Analysekassette transferiert.

9. Das Verfahren nach Anspruch 1, wobei die Messschritte mindestens eine der folgenden Stufen beinhalten:
i) Vorbereitungsschritte der Messung,
ii) Messung, und
iii) Nachbearbeitungsschritte der Messung.

10. Das Verfahren nach Anspruch 9, wobei die Vorbereitungsschritte der Messung mindestens die folgenden Stufen beinhalten:
a) Pufferlösung wird von der Pufferlösungskammer (23) der Flüssigkeitenkassette (3) in die Reaktionskammer der Analysekassette (4) transferiert und gesprüht,
b) das Gemisch, welches in der Reaktionskammer hergestellt wurde, wird angesaugt und von der Reaktionskammer in eine Abfallkammer (24) in der Flüssigkeitenkassette (3) transferiert, und
c) falls notwendig, werden die Stufen *a* und *b* wiederholt, typischerweise ca. 2 bis 10 Mal, und vorteilhafterweise ca. 4 bis 8 Mal.

11. Das Verfahren nach Anspruch 10, wobei die Vorbereitungsschritte für die Messung ebenfalls eine Stufe beinhalten, in welcher die Reaktionskammer durch Einleiten von erhitztem Gas, vorteilhafterweise von Luft, getrocknet wird.

12. Das Verfahren nach Anspruch 9, wobei die Messung auf der Basis des Epi-Illuminations-Prinzips durchgeführt wird.

13. Das Verfahren nach Anspruch 9, wobei als Nachbearbeitungsschritt der Messung mindestens einige der Kammern der Analysekassette (4) durch Transferieren der darin enthaltenen Flüssigkeiten in die Abfallkammer (24) der Flüssigkeitenkassette (3) entleert werden.

14. Das Verfahren nach Anspruch 13, wobei die Probe in der Probenkammer (22) der Flüssigkeitenkassette (3) und die Pufferlösung in der Pufferlösungskammer (23) in die Abfallkammer (24) der Flüssigkeitenkassette (3) transferiert werden.

15. Das Verfahren nach Anspruch 13 oder 14, wobei die Abfallkammer (24) durch Transferieren deren Inhalts in einen Abfallbehälter in dem Analysator (1) geleert wird.

16. Ein Analysator, wobei der Analysator (1) mindestens umfasst:
- Mittel zum Aufnehmen eines Probenbehälters (5) enthaltend die zu messende Probe,
- Mittel zum Handhaben von mindestens einer Flüssigkeitenkassette (3),
- Mittel zum Handhaben von einer oder mehreren Analysekassetten (4),
- Mittel zum Transferieren der Probe von dem Probenbehälter (5) in eine Probenkammer (22) der Flüssigkeitenkassette (3),
- Mittel zum Transferieren der Probe zwischen der Flüssigkeitenkassette (3) und der Analysekassette (4), und
- Mittel zum Durchführen der Messung an der Probe, welche in die Analysekassette (4) transferiert wurde.

17. Der Analysator nach Anspruch 16, wobei die Flüssigkeitenkassette (3) mindestens umfasst:
- ein Werkzeug zum Öffnen des geschlossenen Probenbehälters (5),
- eine Probenkammer (22), welche so angeordnet ist, dass sie mindestens einen Teil der Probe, welche in dem Probenbehälter (5) enthalten ist, aufnehmen kann,
- eine Pufferlösungskammer (23), welche die Pufferlösung enthält, die für die Handhabung der Probe notwendig ist, oder in welche die Pufferlösung, welche für die Handhabung der Probe notwendig ist, eingebracht wird,
- eine Abfallkammer (24), welche zum Aufnehmen von mindestens einigen der Flüssigkeiten, welche in die Analysekassette (4) transferiert wurden, und/oder der überschüssigen Probe, welche in der Probenkammer (22) enthalten ist, und der überschüssigen Pufferlösung, welche in der Pufferlösungskammer (23) enthalten ist, angeordnet ist.

18. Der Analysator nach Anspruch 17, wobei das Werkzeug zum Öffnen des geschlossenen Probenbehälters mindestens einen Lochstecher (29) zum Durchstechen des Deckels des Probenbehälters umfasst.

19. Der Analysator nach Anspruch 16 oder 17, wobei die Mittel zum Handhaben von ein oder mehreren Analysekassetten (4) mindestens eine Kassettentrommel (11) umfassen.

20. Der Analysator nach Anspruch 17, wobei die Flüssigkeitenkassette weiterhin ebenfalls einen losen Jet umfasst, welcher abnehmbar angebracht ist und so angeordnet ist, dass er mindestens bei den Mitteln zum Transferieren der Probe zwischen der Flüssigkeitenkassette (3) und der Analysekassette verwendet werden kann.

21. Eine Flüssigkeitenkassette, wobei die Flüssigkeitenkassette (3) mindestens umfasst:
- ein Werkzeug zum Öffnen des geschlossenen Probenbehälters (5),
- eine Probenkammer (22), welche so angeordnet ist, dass sie mindestens einen Teil der Probe, welche in dem Probenbehälter (5) enthalten ist, aufnehmen kann,
- eine Pufferlösungskammer (23), welche die Pufferlösung enthält, die für die Handhabung der Probe notwendig ist, oder in welche die Pufferlösung, welche für die Handhabung der Probe notwendig ist, eingebracht wird,
- eine Abfallkammer (24), welche zum Aufnehmen von mindestens einigen der Flüssigkeiten, welche in die Analysekassette (4) transferiert wurden, und/oder der überschüssigen Probe, welche in der Probenkammer (22) enthalten ist, und der überschüssigen Pufferlösung, welche in der Pufferlösungskammer (23) enthalten ist, angeordnet ist.

22. Die Flüssigkeitenkassette nach Anspruch 21, wobei das Werkzeug zum Öffnen des geschlossenen Probenbehälters (5) mindestens einen Lochstecher (29) zum Durchstechen des Deckels des Probenbehälters umfasst.

23. Die Flüssigkeitenkassette nach Anspruch 21, wobei die Flüssigkeitenkassette ebenfalls mindestens einen losen Jet umfasst, wobei der lose Pipettenjet abnehmbar angebracht ist.

24. Die Flüssigkeitenkassette nach Anspruch 21, wobei die Abfallkammer (24) mit einem Verfestigungsmittel ausgestattet ist, um die Flüssigkeiten, die eingebracht werden, zu verfestigen.

## Revendications

1. Procédé pour analyser un échantillon, procédé dans lequel l'échantillon est amené à un analyseur, il est soumis à des mesures se rapportant à la détermination de la concentration de l'analyte à examiner, et l'échantillon est mesuré, où
- l'analyseur (1) est équipé d'un contenant d'échantillon (5), d'une cartouche de fluide (3) et d'au moins une cartouche d'analyse (4),
- au moins une partie de l'échantillon pour l'analyse est transférée du contenant d'échantillon (5) à la chambre d'échantillon (22) de la cartouche de fluide (3),
- au moins une partie de l'échantillon est transférée de la chambre d'échantillon (22) de la cartouche de fluide (3) à la cartouche d'analyse (4) qui comprend au moins quelques-uns des réactifs utilisés dans l'analyse, et
- des étapes de mesure sont exécutées pour l'échantillon se trouvant dans la cartouche d'analyse (4).

2. Procédé selon la revendication 1, dans lequel l'analyseur (1) vérifie le type et l'utilisation de la cartouche d'analyse (4) et/ou de la cartouche de fluide (3) avant que l'échantillon ne soit transféré de la cartouche de fluide (3) à la cartouche d'analyse (4).

3. Procédé selon la revendication 1, dans lequel le contenant d'échantillon (5) est ouvert en utilisant un outil (29) se trouvant dans la cartouche de fluide (3) pour ouvrir le contenant d'échantillon fermé, avantageusement en transperçant le couvercle du contenant d'échantillon.

4. Procédé selon la revendication 1, dans lequel le transfert de l'échantillon pour l'analyse du contenant d'échantillon (5) à la chambre d'échantillon (22) de la cartouche de fluide (3) est exécuté par pompage sous vide à travers la chambre d'échantillon (22), avantageusement par exemple au moyen d'une pompe péristaltique (9).

5. Procédé selon la revendication 1, dans lequel une solution tampon est transférée d'une chambre de solution tampon (23) de la cartouche de fluide (3) à une chambre de réaction de la cartouche d'analyse (4) avant que l'échantillon ne soit transféré de la cartouche de fluide (3) à la cartouche d'analyse (4).

6. Procédé selon la revendication 1, dans lequel le transfert de fluides entre la cartouche de fluide (3) et la cartouche d'analyse (4) est exécuté par pipetage.

7. Procédé selon la revendication 6, dans lequel des jets de pipette lâches, avantageusement des jets de pipette lâches jetable, agencés dans l'analyseur (1) en connection avec la cartouche de fluide (3), sont utilisés lors du pipetage.

8. Procédé selon la revendication 1, dans lequel l'échantillon pour l'analyse est dilué avant la mesure, et en ce que la dilution consiste en au moins les étapes suivantes:
- une solution tampon est transférée de la chambre de solution tampon (23) de la cartouche de fluide (3) à la chambre de dilution de la cartouche d'analyse,
- au moins une partie de l'échantillon est transférée de la chambre d'échantillon (22) de la cartouche de fluide (3) à la chambre de dilution de la cartouche d'analyse (4),
- la solution tampon et l'échantillon transféré à la chambre de dilution sont agités, avantageusement en les secouant, et
- le mélange de la solution tampon et de l'échantillon est transféré de la chambre de dilution de la cartouche d'analyse à la chambre de réaction de la cartouche d'analyse.

9. Procédé selon la revendication 1, dans lequel les étapes de mesure comprennent au moins les stades suivants:
i) étapes de préparation de la mesure,
ii) mesure, et
iii) étapes de finition de la mesure.

10. Procédé selon la revendication 9, dans lequel les étapes de préparation de la mesure comprennent au moins les stades suivants:
a) la solution tampon est transférée et projetée de la chambre de solution de tampon (23) de la cartouche de fluide (3) à la chambre de réaction de la cartouche d'analyse (4),
b) le mélange produit dans la chambre de réaction est aspiré et transféré de la chambre de réaction à une chambre de déchets (24) dans la cartouche de fluide (3), et
c) si nécessaire, les stades a et b sont répétés, d'une manière typique approximativement 2 à 10 fois, et avantageusement approximativement 4 à 8 fois.

11. Procédé selon la revendication 10, dans lequel les étapes de préparation pour la mesure comprennent également un stade dans lequel la chambre de réaction est séchée par conduction de gaz chauffé, avantageusement de l'air vers celle-ci.

12. Procédé selon la revendication 9, dans lequel la mesure est exécutée sur la base du principe de l'Epi-illumination.

13. Procédé selon la revendication 9, dans lequel comme étape de finition de la mesure, au moins quelques-unes des chambres de la cartouche d'analyse (4) sont vidées en transférant les fluides se trouvant dans celle-ci à la chambre de déchets (24) de la cartouche de fluide (3).

14. Procédé selon la revendication 13, dans lequel l'échantillon dans la chambre d'échantillon (22) de la cartouche de fluide (3) et la solution tampon dans la chambre de solution tampon (23) sont transférés à la chambre de déchets (24) de la cartouche de fluide (3).

15. Procédé selon la revendication 13 ou 14, dans lequel la chambre de déchets (24) est vidée en transférant le contenu de celle-ci à un contenant de déchets dans l'analyseur (1).

16. Analyseur, où l'analyseur (1) comprend au moins:
- un moyen pour recevoir un contenant d'échantillon (5) contenant l'échantillon à mesurer,
- un moyen de manipulation d'au moins une cartouche de fluide (3),
- un moyen pour manipuler une ou plusieurs cartouches d'analyse (4),
- un moyen pour transférer l'échantillon du contenant d'échantillon (5) à une chambre d'échantillon (22) de la cartouche de fluide (3),
- un moyen pour transférer l'échantillon entre la cartouche de fluide (3) et la cartouche d'analyse (4), et
- un moyen pour exécuter la mesure sur l'échantillon transféré à la cartouche d'analyse (4).

17. Analyseur selon la revendication 16, dans lequel la cartouche de fluide (3) comprend au moins:
- un outil pour ouvrir le contenant d'échantillon fermé (5),
- une chambre d'échantillon (22) qui est agencée pour recevoir au moins une partie de l'échantillon se trouvant dans le contenant d'échantillon (5),
- une chambre de solution tampon (23) qui contient la solution tampon nécessaire pour manipuler l'échantillon, ou dans laquelle la solution tampon nécessaire pour manipuler l'échantillon est agencée à être placée,
- une chambre de déchets (24) qui est agencée pour recevoir au moins quelques-uns des fluides transférés à la cartouche d'analyse (4) et/ou l'échantillon excédentaire se trouvant dans la chambre d'échantillon (22) et la solution tampon excédentaire se trouvant dans la chambre de solution tampon (23).

18. Analyseur selon la revendication 17, dans lequel l'outil pour ouvrir le contenant d'échantillon fermé comprend au moins un outil perçant (29) pour transpercer le couvercle du contenant d'échantillon.

19. Analyseur selon la revendication 16 ou 17, dans lequel le moyen pour manipuler une ou plusieurs cartouches d'analyse (4) comprennent au moins un tambour de cartouche (11).

20. Analyseur selon la revendication 17, dans lequel la cartouche de fluide comprend également au moins un jet lâche, qui est agencé d'une manière amovible et est agencé pour être utilisé au moins dans le moyen pour transférer l'échantillon entre la cartouche de fluide (3) et la cartouche d'analyse.

21. Cartouche de fluide, dans laquelle la cartouche de fluide (3) comprend au moins:
- un outil pour ouvrir le contenant d'échantillon fermé (5),
- une chambre d'échantillon (22) qui est agencée pour recevoir au moins une partie de l'échantillon se trouvant dans le contenant d'échantillon (5),
- une chambre de solution tampon (23) qui contient une solution tampon nécessaire pour la manipulation de l'échantillon, ou dans laquelle la solution tampon nécessaire pour la manipulation de l'échantillon est agencée à être placée,
- une chambre de déchets (24) qui est agencée pour recevoir au moins quelques-uns des fluides transférés à la cartouche d'analyse (4) et/ou l'échantillon excédentaire se trouvant dans la chambre d'échantillon (22) et la solution tampon excédentaire se trouvant dans la chambre de solution tampon (23).

22. Cartouche de fluide selon la revendication 21, dans laquelle l'outil pour ouvrir le contenant d'échantillon fermé (5) comprend au moins un outil perçant (29) pour transpercer le couvercle du contenant d'échantillon.

23. Cartouche de fluide selon la revendication 21, dans laquelle la cartouche de fluide comprend également au moins un jet lâche, comme un jet de pipette lâche qui est agencé amoviblement.

24. Cartouche de fluide selon la revendication 21, dans laquelle la chambre de déchets (24) présente un agent de solidification pour solidifier les fluides à agencer dans celle-ci.
